# DEMANDE DE BREVET EUROPEEN

(11) **EP 3 493 153 A1**
(43) Date de publication de la demande: **05.06.2019**
(21) Numéro de dépôt: 18208915.1
(22) Date de dépôt: 28.11.2018
(51) Int. Cl.: G06T 7/00, G06T 7/246

(54) **PROCÉDÉ ET SYSTÈME DE DÉTECTION DES DÉFAUTS DE GÉOMÉTRIE D'UNE VOIE FERRÉE**

(30) Priorité: 30.11.2017 FR 1761398
(71) Demandeur: SNCF RESEAU, 93418 La Plaine Saint-Denis Cedex (FR)
(72) Inventeur: VOIVRET, Charles, 77400 Thorigny sur Marne (FR)
(74) Mandataire: Delaveau, Sophie

(57) **Abrégé**

L'invention porte principalement sur un procédé de détection d'au moins un défaut de géométrie d'une voie ferrée, caractérisé essentiellement en ce qu'il comprend une étape de détermination des coordonnées tridimensionnelles dans le référentiel d'une première voiture (1) de chaque vecteur de déplacement entre deux images successives, acquises par un dispositif de vision tridimensionnelle, de points d'intérêt (21, 22, 23, 24, 31, 32, 33, 34) d'une autre voiture (2, 3), afin de déterminer des coordonnées géocentriques d'un défaut de géométrie de la voie ferrée.

L'invention concerne également un système embarqué permettant la mise en oeuvre dudit procédé.

## Description

L'invention s'inscrit dans le domaine ferroviaire et plus précisément dans le domaine de l'acquisition au moins partielle du profil tridimensionnel d'une voie ferrée afin d'en détecter les défauts.

L'invention porte plus particulièrement sur un procédé et un système de détection des défauts géométriques d'une voie ferrée, ces défauts étant l'expression d'une déformation indésirable de la voie ferrée.

La géométrie des voies ferrées est un paramètre essentiel à la circulation ferroviaire. En effet, le nombre de défauts géométriques de la voie et surtout leur amplitude doivent être les plus faibles possibles pour assurer la circulation des trains en toute sécurité.

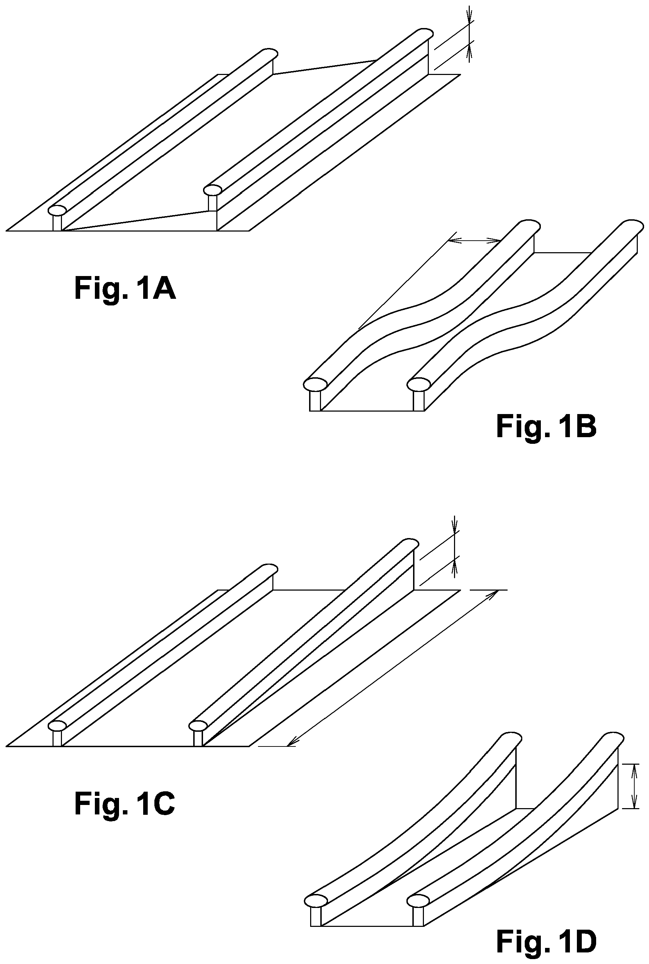

Les défauts géométriques, représentés respectivement sur les figures 1A à 1D, sont principalement de quatre types. Le premier (figure 1A), le dévers, est un surélevement anormal de l'un des rails sur une longue distance. Le deuxième (figure 1B), le dressage, est un changement brutal de direction des deux rails de la voie sur une courte distance. Le troisième (figure 1C), le nivellement transversal, également appelé gauche, est un affaissement ou un surélèvement de l'un des rails de la voie sur une courte distance. Enfin, le quatrième défaut (figure 1D), le nivellement longitudinal, est un affaissement ou un surélèvement anormal des deux rails de la voie sur une courte distance (c'est à dire une distance inférieure à la taille d'un wagon).

Il est connu de mesurer directement le profil d'une voie ferrée à l'aide d'un dispositif de mesure embarqué sur un engin ferroviaire, le dispositif de mesure étant généralement un système optique du type télémètre à nappe laser. Le profil de chaque rail de la voie est ainsi obtenu, et par conséquent les éventuels défauts géométriques et leur position sur la voie sont détectés.

Cependant, il est nécessaire d'utiliser un engin ferroviaire dédié à la réalisation de ces mesures, car l'installation du système optique de mesure demande d'effectuer au préalable des tests de calibration qui sont dépendants de l'engin ferroviaire. En outre, les moyens de mesure mis en oeuvre doivent être à la fois précis et robuste, car souvent installés en extérieur sous le plancher de l'engin (en vis-à-vis des rails). Enfin, l'engin ferroviaire dédié à la mesure doit nécessairement parcourir une grande partie de la voie, voire l'ensemble de la voie, ce qui engendre une gêne pour la circulation commerciale des trains.

L'invention vise ainsi à proposer un procédé de détection d'au moins un défaut de géométrie d'une voie ferrée, permettant de pallier les inconvénients cités ci-dessus, c'est-à-dire proposer un procédé simple à mettre en oeuvre sans interférer avec la circulation commerciale des trains.

L'invention vise également à proposer un système de détection d'au moins un défaut de géométrie d'une voie ferrée ne nécessitant pas l'intégration d'instruments de mesure complexes et coûteux.

À cet effet, le procédé de détection d'au moins un défaut de géométrie d'une voie ferrée comprend au moins les étapes successives de :
i. acquisition à un temps déterminé d'au moins une image par un dispositif de vision embarqué installé dans une première voiture d'une rame circulant sur la voie ferrée, l'intérieur de la première voiture et l'intérieur d'au moins une autre voiture se trouvant dans le champ de vue dudit dispositif de vision ;
ii. sélection dans l'image précédemment acquise d'au moins trois points d'intérêt fixes dans la première voiture pour repérer le référentiel de cette dernière ;
iii. sélection dans ladite image d'au moins trois points d'intérêt fixes dans l'autre voiture ;
iv. détermination à partir de ladite image des coordonnées tridimensionnelles dans le référentiel de la première voiture des points d'intérêt de l'autre voiture sélectionnés précédemment ;
v. acquisition périodique d'une pluralité d'images successives et répétition des étapes iii et iv afin de déterminer à partir de chaque image les coordonnées tridimensionnelles desdits points d'intérêt de l'autre voiture dans le référentiel de la première voiture ;
vi. détermination des coordonnées tridimensionnelles dans le référentiel de la première voiture de chaque vecteur de déplacement entre deux images successives des points d'intérêt de l'autre voiture, l'ensemble des vecteurs de déplacement calculés correspondant à un champ de déplacement des points d'intérêt de l'autre voiture au cours du temps ;
vii. à partir du champ de déplacement correspondant aux vecteurs de déplacement déterminés précédemment, détermination d'un profil d'au moins une portion de la voie ;
viii. lorsque le profil déterminé à l'étape précédente identifie un défaut de géométrie, détermination des coordonnées géocentriques dudit défaut de géométrie, chaque image acquise par le dispositif de vision étant associée à une coordonnée de position dans un référentiel géocentrique.

Le procédé de l'invention peut également comporter les caractéristiques optionnelles suivantes considérées isolément ou selon toutes les combinaisons techniques possibles :
- chaque point d'intérêt fixe sélectionné dans la première voiture et l'autre voiture correspond à un ensemble de pixels de l'image considérée acquise par le dispositif de vision.
- les coordonnées tridimensionnelles de chaque point d'intérêt de l'autre voiture sont déterminées par corrélation de deux images prises au même moment par le dispositif de vision, lequel dispositif est de type stéréoscopique.
- le procédé comprend une étape préliminaire de calibration du dispositif de vision avec une mire.
- le procédé comprend une étape de conversion des mesures en pixels en des mesures métriques.
- chaque image acquise par le dispositif de vision est horodatée.
- chaque vecteur de déplacement est décomposé à l'aide d'un tenseur de déplacement en ces six composantes de mouvement, parmi lesquelles trois translations selon les axes respectifs du référentiel de la première voiture et trois rotations autour desdits axes respectifs du même référentiel.
- un défaut de géométrie est identifié lorsque la norme de l'un des vecteurs de déplacement déterminés est au moins égale à une valeur déterminée.
- la première voiture et l'autre voiture dont les intérieurs respectifs sont dans le champ de vision du dispositif de vision sont adjacentes, l'autre voiture étant dite deuxième voiture.
- la première voiture et l'autre voiture dont les intérieurs respectifs sont dans le champ de vision du dispositif de vision sont séparées par une voiture de la rame, l'autre voiture étant dite troisième voiture.
- les étapes ii à viii sont répétées pour une troisième voiture, l'intérieur de cette troisième voiture étant dans le champs de vue du dispositif de vision lors de l'acquisition d'au moins une image réalisée à l'étape i, la deuxième voiture étant interposée entre la première et la troisième voiture, afin de déterminer le champs de déplacement des points d'intérêt de la troisième voiture au cours du temps, puis les coordonnées géocentriques du défaut de géométrie de la voie identifié grâce au profil de la portion de voie déterminé à partir du champ de déplacement des points d'intérêt de ladite troisième voiture, et en ce qu'il comprend une étape supplémentaire consistant à moyenner les coordonnées géocentriques du défaut de géométrie de voie déterminées à partir des mouvements relatifs respectivement des deuxième et troisième voiture par rapport à la première, afin d'améliorer la précision de la reconstruction spatiale du profil géométrique de la voie ferrée.
- le procédé comprend une étape finale de génération d'un message d'alerte lorsqu'un défaut de géométrie de la voie est identifié, le message comprenant au moins une information sur le type de déformation de voie ainsi que les coordonnées géocentriques dudit défaut.

L'invention vise également un système de détection d'au moins un défaut de géométrie d'une voie ferrée adapté pour mettre en oeuvre un procédé de détection tel que décrit ci-dessus, caractérisé essentiellement en ce qu'il comprend :
- un dispositif de vision embarqué, notamment une caméra vidéo stéréoscopique, installé dans une première voiture d'une rame circulant sur la voie ferrée et adapté pour acquérir au moins une image, l'intérieur de la première voiture et l'intérieur d'au moins une autre voiture se trouvant dans le champ de vue dudit dispositif de vision ;
- des moyens informatiques comprenant au moins un calculateur et un espace mémoire, adaptés pour sélectionner dans l'image acquise au moins trois points d'intérêt fixes dans la première voiture pour repérer le référentiel de cette dernière et au moins trois points d'intérêt fixes dans l'autre voiture, déterminer à partir de ladite image des coordonnées tridimensionnelles dans le référentiel de la première voiture des points d'intérêt de l'autre voiture sélectionnés, déterminer des coordonnées tridimensionnelles dans le référentiel de la première voiture de vecteurs de déplacement entre deux images successives des points d'intérêt de l'autre voiture, l'ensemble des vecteurs de déplacement calculés correspondant à un champ de déplacement des points d'intérêt de l'autre voiture au cours du temps ;
- un horodateur pour associer ladite image à son horaire d'acquisition, et
- un dispositif de géolocalisation pour associer chaque défaut de géométrie identifié à ses coordonnées géocentriques

Le système de détection peut également comporter les caractéristiques optionnelles suivantes considérées isolément ou selon toutes les combinaisons techniques possibles :
- le dispositif de vision est une caméra vidéo stéréoscopique.
- la caméra est du type haute définition avec une résolution au moins égale à 1280 pixel par 1024 pixel, et en ce que la fréquence d'acquisition d'images est au moins égale à 30 hertz.
- le calculateur des moyens informatiques est adapté pour :
   - sélectionner dans l'image précédemment acquise d'au moins trois points d'intérêt fixes dans la première voiture pour repérer le référentiel de cette dernière,
   - sélectionner dans ladite image au moins trois points d'intérêt fixes dans l'autre voiture,
   - déterminer à partir de ladite image des coordonnées tridimensionnelles dans le référentiel de la première voiture des points d'intérêt de l'autre voiture sélectionnés précédemment,
   - déterminer des coordonnées tridimensionnelles dans le référentiel de la première voiture de chaque vecteur de déplacement entre deux images successives des points d'intérêt de l'autre voiture, l'ensemble des vecteurs de déplacement calculés correspondant à un champ de déplacement des points d'intérêt de l'autre voiture au cours du temps,
   - déterminer un profil d'au moins une portion de la voie.

D'autres caractéristiques et avantages de l'invention ressortiront clairement de la description qui en est donnée ci-dessous, à titre indicatif et nullement limitatif, en référence aux figures annexées parmi lesquelles :
- les figures 1A à 1D représentent chacune un défaut particulier de géométrie de la voie ferrée ;
- la figure 2 illustre le champ de vue du dispositif de vision installé dans la première voiture, les points d'intérêt des première, deuxième et troisième voitures étant représentés ;
- la figure 3A illustre une vue de côté d'une rame à trois voitures circulant sur une voie ferrée sans défauts.
- la figure 3B illustre la rame de la figure 3A circulant sur une voie ferrée présentant un défaut de géométrie du type nivellement longitudinal représenté à la figure 1D ;
- la figure 4 illustre deux courbes représentant chacune la rotation des voitures les unes par rapport aux autres de la rame de la figure 3B, selon un axe parallèle aux essieux de la rame ;

Il est tout d'abord précisé que sur les figures, les mêmes références désignent les mêmes éléments quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est également précisé que les figures représentent essentiellement un mode de réalisation de l'objet de l'invention mais qu'il peut exister d'autres modes de réalisation qui répondent à la définition de l'invention.

La présente invention concerne un procédé de détection indirecte des défauts de géométrie des voies ferrées. Ce procédé est mis en oeuvre par un système de détection simple et peu coûteux, qui est installé dans une voiture d'une rame commerciale. Cette rame est par exemple et préférentiellement une rame à plancher plat intégral, dans laquelle l'entièreté de la rame est visible lorsqu'on se retrouve à l'intérieur.

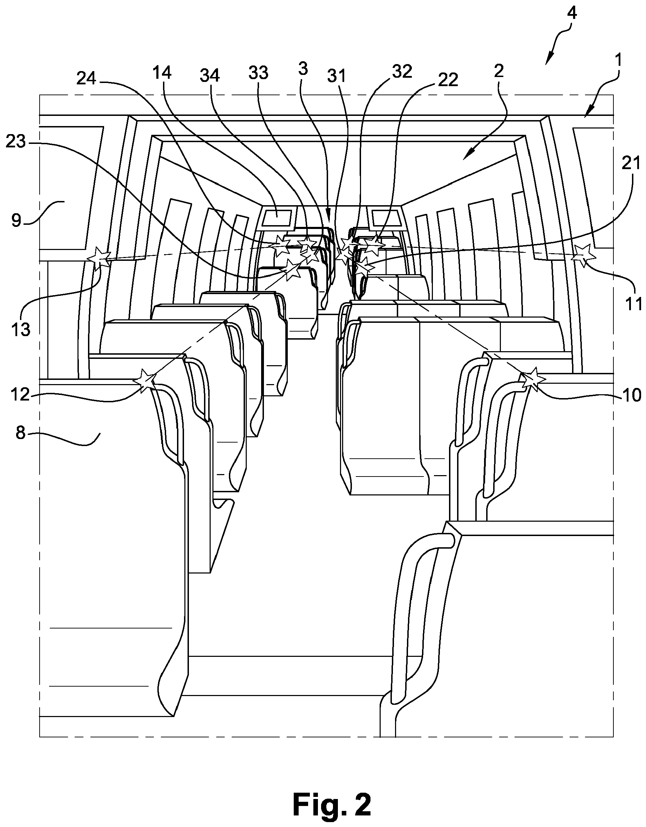

En référence à la figure 2, le système de détection comprend un dispositif de vision tridimensionnelle 5 installé à l'intérieur d'une première voiture 1 de la rame 4, de sorte que l'intérieur de cette première voiture 1, l'intérieur d'une deuxième voiture 2 adjacente à la première, et l'intérieur d'une troisième voiture 3 adjacente à la deuxième voiture 2, se trouvent dans le champ de vision du dispositif de vision 5. Préférentiellement, le dispositif de vision est une caméra. Dans la suite de la description, on utilisera donc le terme caméra pour définir le dispositif de vision tridimensionnelle 5.

Ainsi, pour chaque image acquise par la caméra 5, au moins une partie de l'intérieur des première 1, deuxième 2 et troisième 3 voitures est visible sur ladite image.

Le système de détection comprend en outre des moyens informatiques reliés à la caméra 5 et comprenant classiquement au moins un calculateur et un espace mémoire, ainsi qu'un horodateur et un dispositif de géolocalisation de type GPS (de l'anglais « global positioning system »), dont les fonctions respectives seront décrites ci-après. Ces moyens informatiques peuvent en outre être reliés à un serveur distant par le biais de moyens de communication sans fil, et sur lequel les images acquises seront stockées pour permettre un vidage périodique de l'espace mémoire des moyens informatiques.

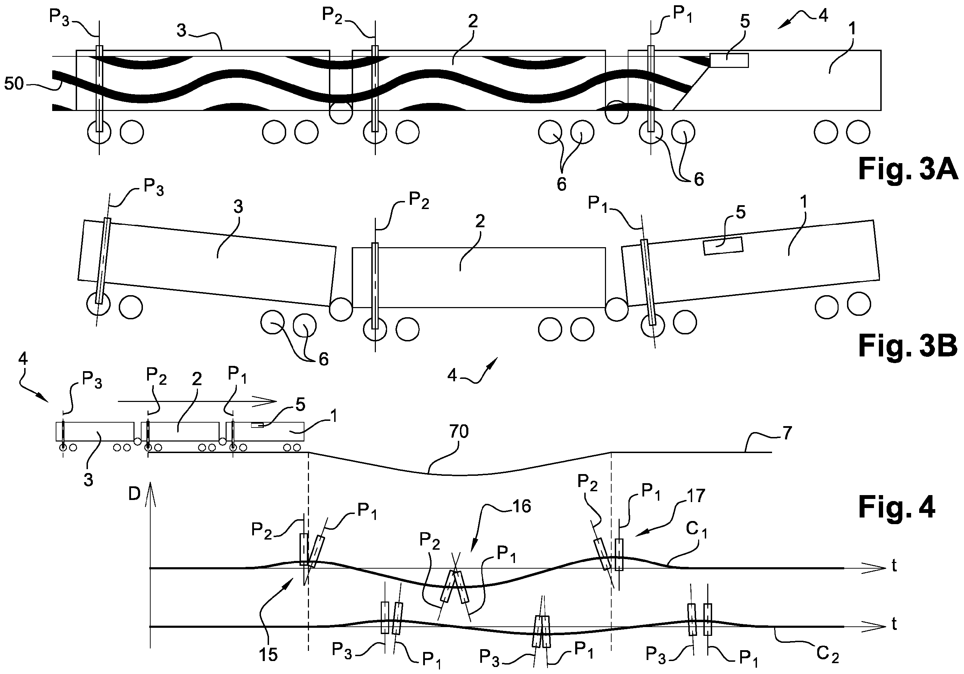

En référence aux figures 3A, 3B et 4, lorsqu'une rame ferroviaire 4 circule sur une voie ferrée 7, les défauts géométriques de la voie 7 se repèrent par le mouvement relatif de l'une des voitures 2, 3 de la rame 4 par rapport à la première voiture 1 lors du passage de la rame 4 sur ledit défaut. Ce mouvement relatif entre deux voitures est assimilable au mouvement relatif de deux corps rigides, un tel mouvement pouvant se décomposer en des translations et des rotations d'un des corps par rapport à l'autre dans l'espace tridimensionnel.

En référence aux figures 3A et 3B, qui illustrent respectivement une rame 4 à trois voitures 1, 2, 3 circulant sur une voie 7 sans défaut et cette même rame 4 circulant sur un défaut de nivellement vertical 70 (figure 4), le déplacement relatif entre deux voitures est caractéristique du ou des défauts de géométrie de la voie 7 ayant provoqué ce déplacement. L'objectif du procédé de l'invention est donc de reconstruire le champ de déplacement d'une des voitures 2, 3 de la rame 4 autre que la première 1 par rapport à ladite première voiture 1, grâce au système de détection de l'invention brièvement décrit ci-dessus. En effet, la caméra 5 étant installée dans cette première voiture 1, cette dernière demeure immobile dans toute image acquise par ladite caméra 5.

Le procédé peut être mis en oeuvre entre deux voitures adjacentes 1, 2, c'est-à-dire entre la première voiture 1 et la deuxième voiture 2 (dans ce cas, l'autre voiture est dite deuxième voiture 2). Le procédé peut également être mis en oeuvre entre la première voiture 1 et la troisième voiture 3 qui est non adjacente à la première 1, tant que l'intérieur de la troisième voiture 3 est dans le champs de vision 50 de la caméra 5 (voir figure 3A). Dans ce dernier cas, l'autre voiture est bien la troisième voiture 3.

La caméra est en mesure d'acquérir une succession d'images à fréquence élevée, de l'ordre de 30Hz soit 30 images par seconde. Plus la fréquence d'acquisition est élevée, meilleure est la précision de la localisation du défaut de voie détecté et identifié. Préférentiellement, la caméra 5 est de type haute définition, c'est-à-dire qu'elle dispose d'une résolution au moins égale à 1280 pixels par 1024 pixels. Une telle caméra 5, disposant des caractéristiques techniques précitées, est en mesure de détecter un défaut de voie de l'ordre du mètre même à vitesse élevée de la rame (plus de 200 km/h), ce qui est suffisant pour l'application recherchée.

En outre, dans la suite de la description, la caméra 5 est de type stéréoscopique. Cela signifie qu'elle comprend deux objectifs espacés de quelques centimètres et qui acquièrent des images simultanément. Chaque objectif est donc adapté pour acquérir des images en deux dimensions, c'est-à-dire dans le plan du capteur de l'objectif considéré. En pratique, ces deux dimensions correspondent sensiblement à une direction transversale à la première voiture 2 et à une direction suivant la hauteur de ladite première voiture 1, perpendiculairement à la direction transversale précitée. Les moyens informatiques utilisent ensuite ces deux images légèrement décalées l'une par rapport à l'autre pour permettre la reconstruction d'une image tridimensionnelle de la scène dans le référentiel orthonormé de la première voiture 1, c'est-à-dire pour ajouter une dimension de profondeur, selon une direction sensiblement longitudinale de la première voiture 1. Ce type de caméra stéréoscopique et les algorithmes permettant la reconstruction d'images sont bien connus de l'homme du métier.

En référence aux figures 2, 3A et 3B, le procédé permettant de reconstruire le champ de déplacement de la deuxième voiture 2 par rapport à la première voiture 1 va être décrit. La première étape du procédé de l'invention consiste en l'acquisition simultanée de deux premières images par la caméra 5, respectivement prises par les deux objectifs. Ces deux images, prises au même moment à un temps déterminé, sont immédiatement horodatées par l'horodateur, et comportent bien entendu le même horodatage. Dans la suite de la description, deux images prises au même moment respectivement par les deux objectifs de la caméra 5 (et possédant donc le même horodatage) sera nommé couple d'images. Comme on le voit sur la figure 3A, le champ de vision 50 de la caméra 5 s'étend dans les première 1, deuxième 2 et troisième 3 voitures.

Au cours de la deuxième étape, les moyens informatiques sélectionnent au moins trois points d'intérêt fixes 11, 12, 13 dans la première voiture 1 de la rame 4. Idéalement, pour une bonne précision des mesures, quatre points d'intérêt 11, 12, 13, 14 sont sélectionnés. Ces points d'intérêt fixes sont par exemple le coin d'au moins un écran 9 installé dans la première voiture 1, ou encore le coin d'un siège 8 de cette première voiture 1. Ces quatre points d'intérêt 11, 12, 13, 14 permettent de définir le référentiel propre de la première voiture 1.

Au cours de la troisième étape, les moyens informatiques sélectionnent au moins trois points d'intérêt fixes 21, 22, 23, idéalement quatre 21, 22, 23, 24, dans la deuxième voiture 2 de la rame 4. Comme pour la première voiture 1, ces points d'intérêt fixes 21, 22, 23, 24 sont par exemple le coin d'au moins un écran 14 installé dans la deuxième voiture 2, ou encore le coin d'un siège de cette deuxième voiture 2.

Chaque point d'intérêt sélectionné 11, 12, 13, 14, 21, 22, 23, 24, aussi bien dans la première voiture 1 que dans la deuxième voiture 2, correspond à un ensemble de pixels dont les coordonnées bidimensionnelles sont connues pour chaque objectif de la caméra 5 et enregistrées dans l'espace mémoire des moyens informatiques.

La quatrième étape consiste en la détermination des coordonnées tridimensionnelles des points d'intérêt 21, 22, 23, 24 de la deuxième voiture 2 dans le référentiel de la première voiture 1. Les moyens informatiques corrèlent les deux premières images prises par les objectifs respectifs et possédant le même horodatage, avec un algorithme de corrélation prévu à cet effet et enregistré dans l'espace mémoire des moyens informatiques.

Pour déterminer ces coordonnées tridimensionnelles, les moyens informatiques recherchent, pour chaque pixel de l'image acquise par le premier objectif de la caméra relatif aux points d'intérêt 21, 22, 23, 24 de la deuxième voiture 2, son pixel correspondant dans l'image de même horodatage prise par l'autre objectif. En outre, en utilisant les paramètres intrinsèques (c'est-à-dire le centre optique de chaque objectif, sa distance focale et son coefficient de distorsion) et extrinsèque (c'est-à-dire la transformation permettant de passer du repère du premier objectif au repère du deuxième objectif) de la caméra 5 enregistrés dans l'espace mémoire, les moyens informatiques déterminent par triangulation l'image tridimensionnelle à partir du couple d'images, et déterminent de fait les coordonnées tridimensionnelles de tous les pixels relatifs aux points d'intérêt 21, 22, 23, 24 de la deuxième voiture 2, dans le référentiel de la première voiture 1.

Ces troisième et quatrième étapes vont être répétées pour chaque couple d'images pris au cours du temps par la caméra 5, chaque image étant en outre horodatée du moment de son acquisition. De la sorte, les moyens informatiques déterminent les coordonnées tridimensionnelles des pixels des points d'intérêt 21, 22, 23, 24 de la deuxième voiture 2 dans le référentiel de la première voiture 1, et ce pour toutes les images tridimensionnelles successives. Cette répétition des troisième et quatrième étapes constitue la cinquième étape du procédé.

Connaissant les coordonnées tridimensionnelles dans le repère de la première voiture 1 des points d'intérêts 21, 22, 23, 24 de la deuxième voiture 2, et cela pour l'ensemble des couples d'images successifs acquis par la caméra 5, les moyens informatiques, au cours de la sixième étape du procédé, déterminent les coordonnées tridimensionnelles du vecteur de déplacement de chaque point d'intérêt 21, 22, 23, 24 de la deuxième voiture 2 entre deux images tridimensionnelles successives. Les coordonnées tridimensionnelles de chaque vecteur de déplacement sont obtenues dans le repère de la première voiture 1.

Ainsi, pour N couples d'images successifs acquis par la caméra 5, les moyens informatiques déterminent N-1 vecteurs de déplacement par point d'intérêt 21, 22, 23, 24 de la deuxième voiture 2, ces vecteurs de déplacement correspondant au champ de déplacement des pixels des points d'intérêt 21, 22, 23, 24 de la deuxième voiture 2 au cours du temps.

Concomitamment, les moyens informatiques décomposent chaque vecteur de déplacement en six composantes de mouvement. Cette décomposition est réalisée à l'aide d'un tenseur de déplacement selon un algorithme de traitement de données connu en soi et enregistré dans l'espace mémoire des moyens informatiques.

Ces six composantes de mouvement correspondent à trois translations selon les trois axes perpendiculaires respectifs du référentiel de la première voiture 1, et à trois rotations respectivement autour de ces mêmes axes. Les moyens informatiques transforment alors ces six informations données en pixels en informations métriques, grâce aux paramètres intrinsèques de la caméra 5.

Si la caméra 5 n'est pas calibrée, c'est-à-dire que les moyens informatiques ne disposent pas des paramètres intrinsèques de ladite caméra 5, alors le procédé comprend une étape préliminaire de calibrage de la caméra 5. De manière connue, cette étape est réalisée en disposant devant les objectifs une mire (de type damier) dont les caractéristiques sont connues (c'est-à-dire notamment la taille des mailles du damier, dit pas du damier). La mire est placée dans différentes positions et différentes orientations dans le champ de vue 50 de la caméra 5. Chaque image recueillie permet ainsi de faire la correspondance entre les positions réelles des intersections du damier dans l'espace et les coordonnées desdites intersections dans le plan du capteur de chaque objectif. Un algorithme de minimisation connu et mis en oeuvre par les moyens informatiques permet alors de déterminer les paramètres intrinsèques de la caméra 5, pour permettre in fine aux moyens informatiques de transformer les informations données en pixels en informations métriques.

La détermination des six composantes de mouvement de chaque vecteur de déplacement permet aux moyens informatiques de déterminer précisément le mouvement de la deuxième voiture 2 par rapport à la première voiture 1 en fonction du temps. A titre d'exemple sur la figure 4, la première courbe C1 représente l'évolution temporelle de l'une des composantes de rotation du mouvement de la deuxième voiture 2 par rapport à la première voiture 1, selon l'axe de l'un des essieux 6 de la rame 4. Cette composante de rotation est directement corrélée au passage de la rame 4 sur un défaut de géométrie de la voie ferrée 7. En particulier et à titre d'exemple sur cette courbe C1, le passage sur un défaut de nivellement vertical 70 de grande amplitude induit successivement une première ouverture 15, un pincement 16 puis une dernière ouverture 17 de l'angle entre deux plans transversaux P1 et P2, le plan P1 s'étendant transversalement dans la première voiture 1 tandis que le plan P2 s'étend transversalement dans la deuxième voiture 2. Au surplus, un plan P3 s'étend transversalement dans la troisième voiture 3. Cette observation, réalisée par les moyens informatiques, permet de déterminer et de délimiter de manière temporelle le défaut géométrique de la voie ferrée 7.

Ainsi, à partir du champ de déplacement correspondant aux vecteurs de déplacement déterminés, les moyens informatiques déterminent au cours de la septième étape un profil géométrique d'une portion de la voie ferrée 7 en fonction du temps.

Au cours de la dernière étape du procédé, les moyens informatiques déterminent les coordonnées géocentriques de ladite portion de voie ferrée 7, chaque image acquise par la caméra 5 étant associée par les moyens informatiques à une coordonnée de positionnement obtenue à l'aide du dispositif de géolocalisation. Ainsi, les moyens informatiques reconstruisent une vision spatiale, et non plus temporelle, du champ de déplacement pouvant être induit par un défaut de géométrie de la voie 7. Ce champ de déplacement spatial de la deuxième voiture 2 par rapport à la première voiture 1 permet de remonter directement au profil géométrique spatial de la voie ferrée 7.

Les moyens informatiques comprennent en outre un seuil de détection enregistré dans l'espace mémoire, à partir duquel au moins l'un des vecteurs de déplacement présente une norme suffisamment grande pour que lesdits moyens informatiques estiment que le mouvement de la deuxième voiture 2 par rapport à la première voiture 1 est véritablement dû à un défaut de la voie ferrée 7, et non pas à de simples imperfections inhérentes à tout système mécanique. Ce seuil de détection dépend directement de valeurs seuils associées à chaque type de défaut de voie, et pour lesquelles une intervention de maintenance devient nécessaire.

Ainsi, lorsque ce seuil d'alerte est dépassé, le procédé de l'invention comprend une étape finale de génération d'un message d'alerte par les moyens informatiques, précisant non seulement qu'un défaut géométrique de la voie 7 a été détecté, mais également des précisions sur le type de défaut, son amplitude et sa localisation sur la voie 7.

Enfin, pour améliorer la précision du système, et en référence à la figure 2 et à la courbe C2 de la figure 4, les moyens informatiques déterminent également les coordonnées des vecteurs de déplacement de quatre points d'intérêt fixes 31, 32, 33, 34 de la troisième voiture 3 par rapport à la première voiture 1, cette troisième voiture 3 étant adjacente à la deuxième voiture 2. En d'autres termes, le procédé reconstruit le champ de déplacement de la troisième voiture 3 par rapport à la première voiture 1. Les moyens informatiques assurent ainsi l'obtention de deux champs de déplacement respectivement de la deuxième voiture 2 par rapport à la première 1 et de la troisième voiture 3 par rapport à la première 1 en reproduisant les étapes du procédé décrites ci-dessus à partir de la deuxième étape, appliquées à la première 1 et à la troisième 3 voiture. Il est en effet inutile de répéter la première étape dans la mesure où l'intérieur des première 1, deuxième 2 et troisième 3 voitures sont dans le champ de vue 50 de la caméra 5, car lors de l'acquisition simultanée de deux premières images par la caméra 5 au cours de la première étape, l'intérieur de la troisième voiture 3 était également représenté dans lesdites premières images.

Les deux champs de déplacement, respectivement associés à la première 1 et à la deuxième 2 voiture, et à la première 1 et à la troisième voiture 3, sont ensuite moyennés par les moyens informatiques, afin d'améliorer la précision de la reconstruction spatiale du profil géométrique de la voie ferrée 7.

A l'aide du système de détection de l'invention comprenant des moyens techniques simples à mettre en oeuvre, le procédé de détection de l'invention permet de reconstruire un profil géométrique spatial d'au moins une portion de voie ferré 7, et de détecter de manière indirecte, mais avec une grande précision, tous les défauts géométriques de la voie ferrée 7 (la corrélation d'images stéréoscopique ayant une précision sub-pixel). En outre, le système de détection est adapté pour être installé dans des rames 4 commerciales et ne nécessite par conséquent aucun engin ferroviaire dédié, ce qui évite toute interférence avec la circulation commerciale des trains lors de la mise en oeuvre du procédé de détection de défauts géométriques de la voie ferrée 7.

Enfin, un aspect intéressant de l'invention est directement lié à l'installation du système de détection sur des rames en service commercial. Les mesures sont obtenues à partir des caméras qui sont embarquées dans des trains transportant des voyageurs, et ces trains sont nombreux à circuler en même temps sur différentes voies ferrées. Il y en a donc une possibilité, en utilisant ainsi une pluralité de systèmes de détection chacun installé dans une rame commerciale, de détecter des défauts géométriques de différentes voies ferrées simultanément.

Le mode de réalisation décrit ci-dessus n'est nullement limitatif, et des modifications peuvent y être apportées sans sortir du cadre de l'invention. Par exemple, tout dispositif de vision 5 permettant d'obtenir des images tridimensionnelles peut être utilisé, comme par exemple une caméra fonctionnant selon le principe du temps de vol dite caméra TOF (de l'anglais « Time Of Flight ») et qui permet de mesurer en temps réel une scène en trois dimensions. Il est également tout à fait possible d'imaginer que les moyens informatiques d'analyse des images acquises pour déterminer le champ de déplacement vectoriel soient déportés sur un serveur distant, et que toutes les images à traiter et acquises par le dispositif de vision 5 soient transférées par le biais de moyens de connexion sans fil vers ledit serveur. Enfin, les étapes du procédé peuvent uniquement s'appliquer aux mouvements de la troisième voiture 3 par rapport à la première voiture 1 pour déterminer le champ de déplacement vectoriel de ladite troisième voiture 3 par rapport à la première 1 afin d'identifier un défaut géométrique de la voie ferrée, sans calculer le champ de déplacement vectoriel de la deuxième voiture 2 par rapport à la première 1.

## Revendications

1. Procédé de détection d'au moins un défaut de géométrie d'une voie ferrée (7), **caractérisé en ce qu'**il comprend au moins les étapes successives de :
i. acquisition à un temps déterminé d'au moins une image par un dispositif de vision embarqué (5) installé dans une première voiture (1) d'une rame (4) circulant sur la voie ferrée (7), l'intérieur de la première voiture (1) et l'intérieur d'au moins une autre voiture (2, 3) se trouvant dans le champ de vue (50) dudit dispositif de vision (5) ;
ii. sélection dans l'image précédemment acquise d'au moins trois points d'intérêt fixes (11, 12, 13, 14) dans la première voiture (1) pour repérer le référentiel de cette dernière ;
iii. sélection dans ladite image d'au moins trois points d'intérêt fixes (21, 22, 23, 24, 31, 32, 33, 34) dans l'autre voiture (2, 3) ;
iv. détermination à partir de ladite image des coordonnées tridimensionnelles dans le référentiel de la première voiture (1) des points d'intérêt (21, 22, 23, 24, 31, 32, 33, 34) de l'autre voiture (2, 3) sélectionnés précédemment ;
v. acquisition périodique d'une pluralité d'images successives et répétition des étapes iii et iv afin de déterminer à partir de chaque image les coordonnées tridimensionnelles desdits points d'intérêt (21, 22, 23, 24, 31, 32, 33, 34) de l'autre voiture (2, 3) dans le référentiel de la première voiture (1) ;
vi. détermination des coordonnées tridimensionnelles dans le référentiel de la première voiture (1) de chaque vecteur de déplacement entre deux images successives des points d'intérêt (21, 22, 23, 24, 31, 32, 33, 34) de l'autre voiture (2, 3), l'ensemble des vecteurs de déplacement calculés correspondant à un champ de déplacement des points d'intérêt (21, 22, 23, 24, 31, 32, 33, 34) de l'autre voiture (2, 3) au cours du temps ;
vii. à partir du champ de déplacement correspondant aux vecteurs de déplacement déterminés précédemment, détermination d'un profil d'au moins une portion de la voie (7) ;
viii. lorsque le profil déterminé à l'étape précédente identifie un défaut de géométrie, détermination des coordonnées géocentriques dudit défaut de géométrie, chaque image acquise par le dispositif de vision (5) étant associée à une coordonnée de position dans un référentiel géocentrique.

2. Procédé de détection selon la revendication 1, **caractérisé en ce que** chaque point d'intérêt fixe (11, 12, 13, 14, 21, 22, 23, 24, 31, 32, 33, 34) sélectionné dans la première (1) et l'autre (2, 3) voitures correspond à un ensemble de pixels de l'image considérée acquise par le dispositif de vision (5).

3. Procédé de détection selon l'une quelconque des revendications précédentes, **caractérisé en ce que** les coordonnées tridimensionnelles de chaque point d'intérêt (21, 22, 23, 24, 31, 32, 33, 34) de l'autre voiture (2, 3) sont déterminées par corrélation de deux images prises au même moment par le dispositif de vision (5), lequel dispositif est de type stéréoscopique.

4. Procédé de détection selon l'une quelconque des revendications précédentes, **caractérisé en ce que** chaque image acquise par le dispositif de vision (5) est horodatée.

5. Procédé de détection selon l'une quelconque des revendications précédentes, **caractérisé en ce que** chaque vecteur de déplacement est décomposé à l'aide d'un tenseur de déplacement en ces six composantes de mouvement, parmi lesquelles trois translations selon les axes respectifs du référentiel de la première voiture (1) et trois rotations autour desdits axes respectifs du même référentiel.

6. Procédé de détection selon l'une quelconque des revendications précédentes, **caractérisé en ce qu'**un défaut de géométrie est identifié lorsque la norme de l'un des vecteurs de déplacement déterminés est au moins égale à une valeur déterminée.

7. Procédé de détection selon l'une quelconque des revendications précédentes, **caractérisé en ce que** la première voiture (1) et l'autre voiture (2) dont les intérieurs respectifs sont dans le champ de vision du dispositif de vision (5) sont adjacentes, l'autre voiture étant dite deuxième voiture (2).

8. Procédé de détection selon la revendication précédente, **caractérisé en ce que** les étapes ii à viii sont répétées pour une troisième voiture (3), l'intérieur de cette troisième voiture (3) étant dans le champs de vue (50) du dispositif de vision (5) lors de l'acquisition d'au moins une image réalisée à l'étape i, la deuxième voiture (2) étant interposée entre la première (1) et la troisième voiture (3), afin de déterminer le champs de déplacement des points d'intérêt (31, 32, 33, 34) de la troisième voiture (3) au cours du temps, puis les coordonnées géocentriques du défaut de géométrie de la voie identifié grâce au profil de la portion de voie (7) déterminé à partir du champ de déplacement des points d'intérêt (31, 32, 33, 34) de ladite troisième voiture (3), et **en ce qu'**il comprend une étape supplémentaire consistant à moyenner les coordonnées géocentriques du défaut de géométrie de voie (7) déterminées à partir des mouvements relatifs respectivement des deuxième (2) et troisième (3) voiture par rapport à la première (1), afin d'améliorer la précision de la reconstruction spatiale du profil géométrique de la voie ferrée (7).

9. Procédé de détection selon l'une quelconque des revendications précédentes, **caractérisé en ce qu'**il comprend une étape finale de génération d'un message d'alerte lorsqu'un défaut de géométrie de la voie (7) est identifié, le message comprenant au moins une information sur le type de déformation de voie (7) ainsi que les coordonnées géocentriques dudit défaut.

10. Système de détection d'au moins un défaut de géométrie d'une voie ferrée (7) adapté pour mettre en oeuvre un procédé de détection selon l'une quelconque des revendications 1 à 9, **caractérisé en ce qu'**il comprend :
• un dispositif de vision (5) embarqué, notamment une caméra vidéo stéréoscopique, installé dans une première voiture (1) d'une rame (4) circulant sur la voie ferrée (7) et adapté pour acquérir au moins une image, l'intérieur de la première voiture (1) et l'intérieur d'au moins une autre voiture (2, 3) se trouvant dans le champ de vue (50) dudit dispositif de vision (5) ;
• des moyens informatiques comprenant au moins un calculateur et un espace mémoire ;
• un horodateur pour associer ladite image à son horaire d'acquisition, et
• un dispositif de géolocalisation pour associer chaque défaut de géométrie identifié à ses coordonnées géocentriques.

11. Système de détection selon la revendication précédente, **caractérisé en ce que** le calculateur des moyens informatiques est adapté pour :
• sélectionner dans l'image précédemment acquise d'au moins trois points d'intérêt fixes (11, 12, 13, 14) dans la première voiture (1) pour repérer le référentiel de cette dernière,
• sélectionner dans ladite image au moins trois points d'intérêt fixes (21, 22, 23, 24, 31, 32, 33, 34) dans l'autre voiture (2, 3),
• déterminer à partir de ladite image des coordonnées tridimensionnelles dans le référentiel de la première voiture (1) des points d'intérêt (21, 22, 23, 24, 31, 32, 33, 34) de l'autre voiture (2, 3) sélectionnés précédemment,
• déterminer des coordonnées tridimensionnelles dans le référentiel de la première voiture (1) de chaque vecteur de déplacement entre deux images successives des points d'intérêt (21, 22, 23, 24, 31, 32, 33, 34) de l'autre voiture (2, 3), l'ensemble des vecteurs de déplacement calculés correspondant à un champ de déplacement des points d'intérêt (21, 22, 23, 24, 31, 32, 33, 34) de l'autre voiture (2, 3) au cours du temps,
• déterminer un profil d'au moins une portion de la voie (7).
